# EUROPÄISCHE PATENTANMELDUNG

(11) **EP 1 008 924 A1**
(43) Veröffentlichungstag der Anmeldung: **14.06.2000**
(21) Anmeldenummer: 99123730.6
(22) Anmeldetag: 30.11.1999
(51) Int. Cl.: G06F 1/16

(54) **Vorrichtung zur visuellen Darstellung von Produktinformationen**

(30) Priorität: 09.12.1998 DE 19857250; 29.10.1999 DE 19952252
(71) Anmelder: Murer, Claudia, 56564 Neuwied (DE)
(72) Erfinder: Murer, Jürgen, 56507 Neuwied (DE)
(74) Vertreter: Podszus, Burghart, Dipl.-Phys., Dipl.-Wirtsch.-Ing.

(57) **Zusammenfassung**

Die Erfindung betrifft eine Vorrichtung (1) zur visuellen Darstellung von Produktinformationen, amtlichen Mitteilungen u. dgl. mit einem Bildschirmgehäuse (2) und einem an der Vorderseite (3) des Bildschirmgehäuses (2) angeordneten großformatigen Flachbildschirm (4;40-42) sowie mindestens einem den Flachbildschirm ansteuernden mit Dateneingabeeinrichtungen (9-11;36-38) verbundenen Digitalrechner (7;35).

Um zu erreichen, daß die Vorrichtung (1) bei geringer Tiefe des Bildschirmgehäuses (2) eine möglichst große Fläche zur Anzeige von Produktinformationen etc. besitzt, schlägt die Erfindung vor, daß der Flachbildschirm (4;40-42) bis auf einen relativ schmalen Randbereich (5) die gesamte Vorderseite (3) des Bildschirmgehäuses (2) ausfüllt. Sofern der Digitalrechner (7) in das Bildschirmgehäuse (2) integriert ist, befinden sich alle die zur Ansteuerung des Digitalrechners (7) erforderlichen Dateneingabeeinrichtungen (9-11) im Bereich der Seitenwände (19-22) des Bildschirmgehäuses (2) und sind von außen zugänglich angeordnet.

## Beschreibung

Die Erfindung betrifft eine Vorrichtung zur visuellen Darstellung von Produktinformationen, amtlichen Mitteilungen u. dgl. mit einem Gehäuse und einem an der Vorderseite des Bildschirmgehäuses angeordneten großformatigen Flachbildschirm sowie mindestens einem den Flachbildschirm ansteuernden mit Eingabemitteln verbindbaren Digitalrechner.

Aus der DE-GM 93 10 553 ist ein elektronischer Werbeträger mit einem Flachbildschirm bekannt. Der Flachbildschirm ist dabei an dem senkrechten Schenkel eines L-förmig ausgebildeten Gehäuses angeordnet, welches gleichzeitig als Untersatz für eine Registrierkasse dient. In dem Gehäuse sind sowohl ein Rechner als auch ein Laufwerk für einen Datenträger zur Darstellung von Werbeinformationen in Form von Computergrafiken oder Videos angeordnet.

Eine derartige Vorrichtung ist lediglich für kleinere Flachbildschirme geeignet.

Aus der DE-GM 92 15 958 ist ferner ein Werbemonitor bekannt, bei dem Rechner und Bildschirm in einem gemeinsamen Gehäuse untergebracht sind. Über eine platzsparende Anordnung der einzelnen Bauteile macht diese Druckschrift keine näheren Angaben.

Der Erfindung liegt die Aufgabe zugrunde, eine Vorrichtung mit einem Bildschirmgehäuse anzugeben, welches für die Anzeige der Produktinformationen etc. eine möglichst große Fläche bei gleichzeitig geringer Tiefe des Bildschirmgehäuses aufweist.

Diese Aufgabe wird erfindungsgemäß durch die Merkmale der Ansprüche 1 und 3 gelöst. Weitere, besonders vorteilhafte Ausgestaltungen der Erfindung offenbaren die Unteransprüche.

Die Erfindung beruht im wesentlichen auf dem Gedanken, daß der Flachbildschirm bis auf einen relativ schmalen Randbereich die gesamte Vorderseite des Bildschirmgehäuses ausfüllt. Dabei kann der Digitalrechner in dem Bildschirmgehäuse angeordnet sein oder sich in einem separaten Gehäuse befinden.

Als Flachbildschirm eignen sich unter anderem sowohl Flüssigkeitsanzeigen (LCD) als auch Plasmaanzeigen, wobei die Bildschirmdiagonale möglichst ≥ 1 m sein sollte, um die dargestellten Informationen auch noch aus größerer Entfernung erkennen zu können.

Um die Werbeinformationen einem möglichst großen Kreis von Personen zugänglich zu machen, hat es sich als vorteilhaft erwiesen, auch auf der Rückseite des Bildschirmgehäuses einen entsprechenden Bildschirm anzuordnen.

Die Anordnung des Digitalrechners und der diversen Dateneingabeeinrichtungen in einem separaten Gehäuse hat sich insbesondere dann als zweckmäßig erwiesen, wenn mehrere Flachbildschirme (z.B. in den einzelnen Stockwerken eines Warenhauses) gleichzeitig zentral angesteuert werden sollen.

Das jeweilige Bildschirmgehäuse kann sowohl hängend als auch an einem Ständer angeordnet werden.

Bei Vorrichtungen mit in dem Bildschirmgehäuse integriertem Digitalrechner sind alle die zur Ansteuerung des Digitalrechners erforderlichen Dateneingabeeinrichtungen im Bereich der Seitenwände des Bildschirmgehäuses von außen zugänglich angeordnet.

Bei einer besonders vorteilhaften Ausführungsform der Erfindung ist der Digitalrechner über ein in dem Bildschirmgehäuse angeordnetes Modem verbunden, welches mit einer entsprechenden, an einer Seitenwand des Bildschirmgehäuses angeordneten Steckverbindung verbunden ist. Durch Verwendung eines derartigen Modems ist es möglich, die darzustellenden Informationen von einem zentralen Ort aus auf die erfindungsgemäße Vorrichtung zu übertragen. Dieses ist insbesondere dann zweckmäßig, wein sich eine Vielzahl erfindungsgemäßer Vorrichtungen an weit auseinander liegenden Standorten befinden.

Statt eines Modems bzw. ergänzend hierzu kann in dem Bildschirmgehäuse bzw. in dem Gehäuse des separat angeordneten Digitalrechners auch ein mit dem Digitalrechner verbundener Satellitendecoder angeordnet sein, der über entsprechende Steckverbindungen mit einer Satellitenantenne verbindbar ist.

Auch die Verwendung eines Fernsehwandlers kann in dem entsprechenden Gehäuse vorgesehen sein, um z.B. zusätzlich zu der Werbeinformation in einem Teilbereich des Flachbildschirmes ein Fernsehbild einzublenden.

Weitere Einzelheiten und Vorteile der Erfindung ergeben sich aus den folgenden anhand von Figuren erläuterten Ausführungsbeispielen. Es zeigen:
Fig.1 ein elektrisches Blockschaltbild einer erfindungsgemäßen Vorrichtung mit einem Bildschirmgehäuse mit integriertem Digitalrechner;
Fig.2 eine hängend angeordnete erfindungsgemäße Vorrichtung;
Fig.3 eine an einem Ständer befestigte erfindungsgemäße Vorrichtung und
Fig.4 ein Blockschaltbild einer weiteren erfindungsgemäßen Vorrichtung mit einem Digitalrechner und drei Bildschirmgehäusen.

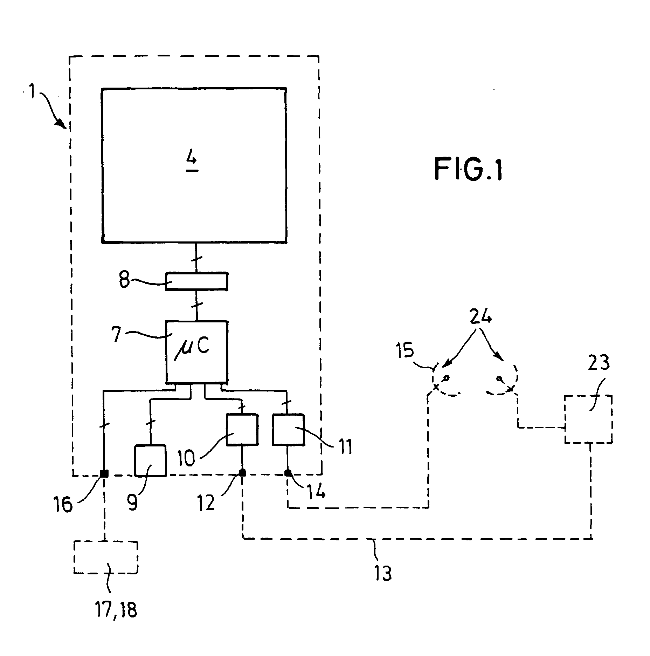

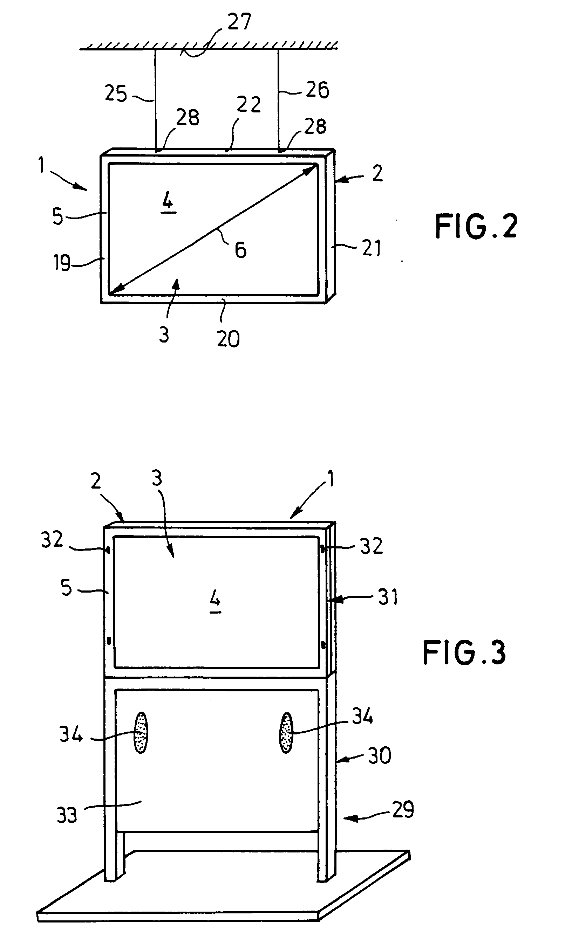

In den Fig.1-3 ist mit 1 die erfindungsgemäße Vorrichtung bezeichnet. Sie umfaßt im wesentlichen ein als Flachgehäuse ausgebildetes Bildschirmgehäuse 2 und einen an der Vorderseite 3 des Gehäuses 2 angeordneten großformatigen Flachbildschirm 4, der bis auf einen schmalen Randbereich 5 die gesamte Vorderwand des Bildschirmgehäuses 2 einnimmt (Fig.2). Bei dem Bildschirm 4 handelt es sich z.B. um einen Gasplasma-Flachbildschirm mit einer Diagonale 6 ≥ 1 m.

Das Bildschirmgehäuse 2 umfaßt einen Mikrokontroller (Digitalrechner) 7 (Fig.1), der über eine Grafikkarte 8 mit dem Flachbildschirm 4 verbunden ist, sowie mehrere zur Ansteuerung des Digitalrechners 7 erforderliche Dateneingabeeinrichtungen 9-11. Als Dateneingabeeinrichtungen dienen dabei mindestens ein Laufwerk 9 zum Einlegen eines Datenträgers (z.B. Floppydisk- oder CD-ROM-Laufwerk), ein Modem 10, welches über eine erste Steckverbindung 12, z.B. mit dem Telefonnetz 13, verbindbar ist, und ein Satellitendecoder 11, der über eine zweite Steckverbindung 14 mit einer Satellitenantenne 15 verbindbar ist.

Außerdem ist der Digitalrechner 7 mit einer dritten Steckverbindung 16 verbunden, über die eine externe Tastatur 17 und/oder eine Maus 18 an der Vorrichtung 1 anschließbar ist. Das Laufwerk 9 sowie die Steckverbindungen 12, 14 und 16 sind an den Seitenwänden 19-22 des Bildschirmgehäuses 2 (Fig.2) von außen zugänglich und können, falls dieses erforderlich ist, auch mit einer oder mehreren Klappe(n) an den entsprechenden Seitenwänden verdeckt angeordnet sein.

Durch die Verwendung des Modems 10 (Fig.1) ist es möglich, sowohl die darzustellenden Informationen als auch die Einstellung der jeweiligen erfindungsgemäßen Vorrichtung von einem zentral angeordneten Rechner 23 gleichzeitig auf mehrere Vorrichtungen 1 zu übertragen. Dabei können sich die Vorrichtungen 1 sowohl in dem gleichen Gebäude als auch an völlig unterschiedlichen weit auseinander liegenden Standorten befinden.

Eine entsprechende Fernübertragung kann auch über eine Satellitenverbindung 24 erfolgen, wenn der Satellitendecoder 11 mit einer entsprechenden Antenne 15 verbunden ist.

Wie aus Fig.2 ersichtlich ist, kann die erfindungsgemäße Vorrichtung 1 über zwei Seile 25, 26 hängend an der Decke 27 eines Raumes befestigt werden. Die Befestigung der Seile 25, 26 an der erfindungsgemäßen Vorrichtung 1 erfolgt dabei über entsprechende Befestigungseinrichtungen 28 auf der oberen Seitenwand 22 des Bildschirmgehäuses 2.

Die erfindungsgemäße Vorrichtung 1 kann auch an einem Ständer 29 angeordnet werden (Fig.3). Hierzu umfaßt der Ständer einen Rahmen 30, welcher im Bereich des zu befestigenden Bildschirmgehäuses 2 seitliche Längsstreben 31 besitzt, zwischen denen das Bildschirmgehäuse 2, z.B. mittels Schrauben 32, befestigt wird. Zur Erläuterung der auf dem Flachbildschirm 4 dargestellten Bildinformationen durch entsprechende Toninformationen kann an dem Ständer 29 ein weiteres Gehäuseteil 33 vorgesehen sein, an dem mit der Vorrichtung 1 verbindbare Lautsprecher 34 angeordnet sind.

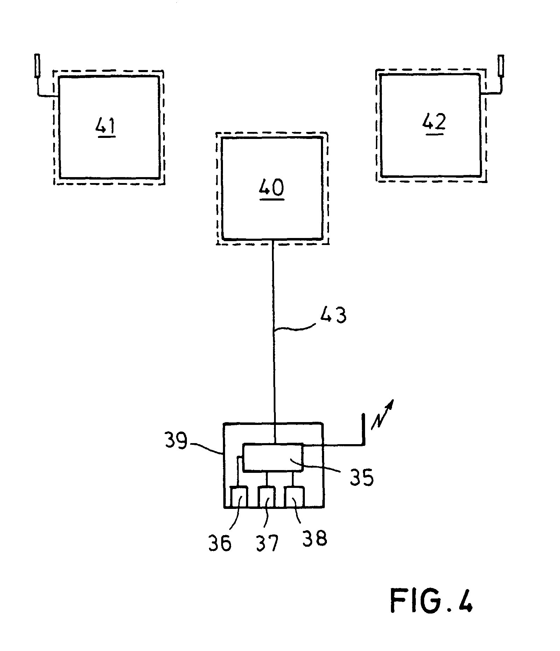

Die Erfindung ist selbstverständlich nicht auf das vorstehend beschriebene Ausführungsbeispiel beschränkt. So zeigt Fig.4 ein weiteres Ausführungsbeispiel, bei dem ein Digitalrechner 35 mit verschiedenen Dateneingabeeinrichtungen 36-38 in einem separaten Gehäuse 39 angeordnet ist und drei an verschiedenen Orten befindliche Flachbildschirme 40-42 ansteuert. Die Datenübertragung kann dabei über elektrische Leitungen 43 oder drahtlos, z.B. über Funk, erfolgen.

### Bezugszeichenliste

- 1: Vorrichtung
- 2: Bildschirmgehäuse, Gehäuse
- 3: Vorderseite
- 4: Flachbildschirm
- 5: Randbereich
- 6: Diagonale
- 7: Mikrokontroller, Digitalrechner
- 8: Grafikkarte
- 9: Laufwerk, Dateneingabeeinrichtung
- 10: Modem, Dateneingabeeinrichtung
- 11: Satellitendecoder, Dateneingabeeinrichtung
- 12: erste Steckverbindung
- 13: Telefonnetz
- 14: zweite Steckverbindung
- 15: Satellitenantenne, Antenne
- 16: dritte Steckverbindung
- 17: Tastatur
- 18: Maus
- 19: Seitenwand
- 20: untere Seitenwand
- 21: Seitenwand
- 22: obere Seitenwand
- 23: Rechner
- 24: Satellitenverbindung
- 25,26: Seile
- 27: Decke
- 28: Befestigungseinrichtung
- 29: Ständer
- 30: Rahmen
- 31: Längsstrebe
- 32: Schraube
- 33: Gehäuseteil
- 34: Lautsprecher
- 35: Digitalrechner
- 36-38: Dateneingabeeinrichtungen
- 39: Gehäuse
- 40-42: Flachbildschirme
- 43: elektrische Leitung

## Patentansprüche

1. Vorrichtung zur visuellen Darstellung von Produktinformationen, amtlichen Mitteilungen u. dgl. mit einem Bildschirmgehäuse (2) und einem an der Vorderseite (3) des Bildschirmgehäuses (2) angeordneten großformatigen Flachbildschirm (4;40-42) sowie mindestens einem den Flachbildschirm ansteuernden mit Dateneingabeeinrichtungen (9-11;36-38) verbindbaren Digitalrechner (7;35), mit den Merkmalen:
a) das Bildschirmgehäuse (2) ist als Flachgehäuse ausgestaltet und weist eine Tiefe auf, die kleiner als die Breite oder Höhe des Flachbildschirmes (4;40-42) ist;
b) der Flachbildschirm (4;40-42) nimmt bis auf einen schmalen Randbereich (5) die gesamte Vorderseite (3) des Bildschirmgehäuses (2) ein;
c) der Digitalrechner (7) ist in dem Bildschirmgehäuse (2) angeordnet und
d) die zur Ansteuerung des Digitalrechners (7) erforderlichen Dateneingabeeinrichtungen (9-11) sind derart an bzw. in dem Bildschirmgehäuse (2) angeordnet, daß sie direkt oder über Steckverbindungen (12,14) über mindestens eine der Seitenwände (19-22) des Bildschirmgehäuses (2) von außen zugänglich sind.

2. Vorrichtung nach Anspruch 1, **dadurch gekennzeichnet**, daß zur Ansteuerung des Digitalrechners (7) mittels einer externen Tastatur (17) und/oder einer Maus (18) der Digitalrechner (7) gegebenenfalls über weitere elektronische Komponenten mit einer an einer Seitenwand (19-22) des Bildschirmgehäuses (2) angeordneten dritten Steckverbindung (16) verbunden ist, welche mit der Tastatur (17) und/oder der Maus (18) über einen entsprechenden Stecker verbindbar ist.

3. Vorrichtung zur visuellen Darstellung von Produktinformationen, amtlichen Mitteilungen u. dgl. mit einem Bildschirmgehäuse (2) und einem an der Vorderseite (3) des Bildschirmgehäuses (2) angeordneten großformatigen Flachbildschirm (4;40-42) sowie mindestens einem den Flachbildschirm ansteuernden mit Dateneingabeeinrichtungen (9-11) verbindbaren Digitalrechner (7;35), mit den Merkmalen:
a) das Bildschirmgehäuse (2) ist als Flachgehäuse ausgestaltet und weist eine Tiefe auf, die kleiner als die Breite oder Höhe des Flachbildschirmes (4;40-42) ist;
b) der Flachbildschirm (4;40-42) nimmt bis auf einen schmalen Randbereich (5) die gesamte Vorderseite (3) des Bildschirmgehäuses (2) ein;
c) der Digitalrechner (35) ist in einem separaten Gehäuse (39) angeordnet und entweder über elektrische Leitungen (43) oder drahtlos mit dem Flachbildschirm (40-42) verbunden.

4. Vorrichtung nach einem der Ansprüche 1 bis 3, **dadurch gekennzeichnet**, daß als Dateneingabeeinrichtung (9;36-38) mindestens ein Laufwerk zum Einlegen eines Datenträgers vorgesehen ist.

5. Vorrichtung nach einem der Ansprüche 1 bis 4, **dadurch gekennzeichnet**, daß in dem Bildschirmgehäuse (2) oder dem separaten Gehäuse (39) des Digitalrechners (35) ein den Digitalrechner (7;35) ansteuerndes Modem (10) angeordnet ist.

6. Vorrichtung nach einem der Ansprüche 1 bis 5, **dadurch gekennzeichnet**, daß in dem Bildschirmgehäuse (2) oder dem separaten Gehäuse (39) des Digitalrechners (35) ein den Digitalrechner (7) ansteuerbarer Satellitendecoder (11) angeordnet ist.

7. Vorrichtung nach einem der Ansprüche 1 bis 6, **dadurch gekennzeichnet**, daß in dem Bildschirmgehäuse (2) oder dem separaten Gehäuse (39) des Digitalrechners (35) zur Darstellung zusätzlicher Fernsehbilder aufdem Flachbildschirm (4;40-42) ein Fernsehbildwandler angeordnet ist.

8. Vorrichtung nach einem der Ansprüche 1 bis 7, **dadurch gekennzeichnet**, daß das Bildschirmgehäuse (2) zum Aufhängen der Vorrichtung (1) auf seiner oberen Seitenwand (22) mit einer Befestigungseinrichtung (28) für Seile (25,26) versehen ist.

9. Vorrichtung nach einem der Ansprüche 1 bis 7, **dadurch gekennzeichnet**, daß das Bildschirmgehäuse (2) an einem Ständer (29) anordbar ist und daß der Ständer (29) einen Rahmen umfaßt, welcher seitliche Längsstreben (31) besitzt, zwischen denen das Bildschirmgehäuse (2) befestigbar ist.

10. Vorrichtung nach Anspruch 9, **dadurch gekennzeichnet**, daß zur Erläuterung der auf dem Flachbildschirm (4;40-42) dargestellten Bildinformationen durch entsprechende Toninformationen an dem Ständer (29) ein weiteres mit mindestens einem Lautsprecher (34) versehenes Gehäuseteil (33) angeordnet ist.

11. Vorrichtung nach einem der Ansprüche 1 bis 10, **dadurch gekennzeichnet**, daß der Flachbildschirm (4;40-42) eine Diagonale ≥ 1 m besitzt.

12. Vorrichtung nach einem der Ansprüche 1 bis 11, **dadurch gekennzeichnet**, daß auch auf der Rückseite des Bildschirmgehäuses (2) ein dem auf der Vorderseite (3) entsprechender Flachbildschirm (4;40-42) angeordnet ist.
